# EUROPÄISCHE PATENTSCHRIFT

(11) **EP 0 757 266 B1**
(45) Veröffentlichungstag und Bekanntmachung des Hinweises auf die Patenterteilung: **14.03.2007**
(21) Anmeldenummer: 96110870.1
(22) Anmeldetag: 05.07.1996
(51) Int. Cl.: G02B 6/44

(54) **Wickelkörper mit Glasfaser-Lichtwellenleiter**
Bobbin with optical fiber
Bobine avec fibre optique

(30) Priorität: 02.08.1995 DE 19528347
(43) Veröffentlichungstag der Anmeldung: 05.02.1997
(73) Patentinhaber: LFK Lenkflugkörpersysteme GmbH, 85716 Unterschleissheim (DE)
(72) Erfinder: von Hoessle, Wolfgang, 85521 Riemerling (DE); Roder, Kuno, 85614 Eglharting (DE); Albert, Elmar, 73272 Neidlingen (DE)
(74) Vertreter: Hummel, Adam

(56) Entgegenhaltungen:
- EP-A- 0 616 237
- EP-A- 0 742 457
- GB-A- 1 359 913
- US-A- 4 995 698

## Beschreibung

Die Erfindung bezieht sich auf einen Wickelkörper nach dem Oberbegriff des Patentanpruchs 1.

Ein wichtiges Anwendungsgebiet von Wickelkörpern dieser Art besteht darin, daß sie, bewickelt mit einem Lichtwellenleiter von bis zu 100 km Länge oder mehr, an Bord eines Flugkörpers oder eines Land- oder Wasserfahrzeugs mitgeführt werden und dann der Lichtwellenleiter während des Flugs bzw. während der Fahrt entgegen der Fahrtrichtung von dem fest am Fahrzeug montierten Wickelkörper in Axialrichtung desselben abgespult wird, um so auf dem Wege über den Lichtwellenleiter zwischen dem sich bewegenden Fahrzeug und einer Empfangsstelle einen kontinuierlichen Datenaustausch hoher Übertragungsdichte zu ermöglichen.

Beim Bewickeln des Wickelträgers wird der Lichtwellenleiter mit einem Bindemittel in Form einer Klebstoff- oder Lackschicht versehen, die ein flüchtiges Lösungsmittel enthält und nach dem Austrocknen eine stoffschlüssige Wickelbindung zwischen den einzelnen Windungen der Bewicklung ergibt. Eine solche Klebe- oder Haftschicht verleiht der Bewicklung die notwendige Festigkeit, um bei Vibrationen oder sonstigen mechanischen Belastungen nicht derart zerstört zu werden, daß beim späteren schnellen Abziehen des Lichtwellenleiters ein Funktionsausfall entsteht, also sich etwa die Bewicklung in einzelne Wickellagen auflöst. Daher wird eine relativ hohe Klebekraft angestrebt. Andererseits dürfen die Reibung des Lichtwellenleiters und die beim Abspulen wirksame Zugspannung nicht zu groß werden, so daß die Klebekraft in bestimmten Grenzen gehalten werden muß. Durch ungleichmäßige, sich sprunghaft ändernde Klebekräfte wird das Ablaufverhalten des Lichtwellenleiters stark beeinflußt, und insbesondere am Ablösepunkt von der Bewicklung kann es dann zu Mikrobiegungen des Lichtwellenleiters kommen, die die Signalübertragung bis zu einem vollständigen Systemausfall stören können. Daher wird eine definierte Klebekraft und demzufolge eine gleichmäßige Austrockung des Bindemittels über die gesamte Bewicklung gefordert.

Bei den bekannten Wickelkörpern der eingangs genannten Art trocknet jedoch das Bindemittel an den luftseitigen Außenflächen der Bewicklung sehr rasch ab, so daß sich dort eine Kleber- oder Lackhaut bildet, die ein weiteres Abdiffundieren des Lösungsmittels aus dem Inneren der Bewicklung und damit ein Austrocknen der Wickelbindung an den tieferen Wickellagen verhindert. Die Folge ist, daß die Bewicklung auch noch nach längeren Lagerzeiten eine ungleichförmige Wickelbindung ohne definierte Klebekräfte besitzt und die Gefahr besteht, daß die verbliebenen Lösungsmittelrückstände in den Lichtwellenleiter eindringen und dort die Grunddämpfung des Lichtwellenleiters erhöhen oder gar Sollbruchstellen entstehen lassen, die beim späteren Abspulen des Lichtwellenleiters zu einer Unterbrechung der Signalübertragung führen. Hinzu kommt, daß der Wickelkörper während des Tranports häufig starken Temperaturschwankungen ausgesetzt ist, die Dehnungspannungen in der Bewicklung verursachen, so daß der Lichtwellenleiter hinsichtlich seiner Signalübertragungseigenschaften bereits vorgeschädigt ist, bevor er überhaupt am Einsatzort zu Datenaustauschzwecken von dem Wickelkörper abgespult wird.

Gemäß DE 195 16 899 ist bereits vorgeschlagen worden, den Wickelträger aus einem offenporig porösen Material mit einem bezüglich des Lösungsmittels im wesentlichen gleichen oder geringfügig kleineren Diffusionskoeffizienten wie die Bewicklung herzustellen. Infolgedessen kann das Lösungsmittel aus dem Inneren der Bewicklung auf dem Wege über den Wickelträger laufend radial nach innen abdiffundieren und in die umgebende Atmosphäre entweichen, ohne daß sich an der Grenzfläche zwischen Bewicklung und Wickelträger eine diffusionshemmende Sperrschicht in Form einer Kleber- bzw. Lackhaut bildet, bis das Bindemittel vollständig abgetrocknet ist. Somit werden die Lösungsmittelrückstände im Inneren der Bewicklung abgebaut und über die gesamte Bewicklung eine deutlich vergleichmäßigte Wickelbindung zwischen den einzelnen Windungen erzielt.

Ferner ist aus GB-A-1 359 913 ein zylindrischer Wickelkörper für Garn bekannt, bei dem die äußerste nicht-absorbierende Schicht des Wickelkörpers, auf dem die innerste Schicht des Wickels aufliegt, perforiert ist, um das Migrieren von überflüssiger Finishing-Lösung aus dem Wickel in eine absorbierende Schicht des Wickelkörpers zu ermöglichen.

Des weiteren ist es aus US-A-4 995 698 bekannt, für einen Glasfaser-Wickelkörper ein Material mit anisotropen Wärmeausdehnungskoeffizienten zu verwenden, um die unterschiedlichen Ausdehnungskoeffizienten der aufgewickelten Glasfaser in Längs- und Querrichtung auszugleichen.

Aufgabe der Erfindung ist es, den Wickelkörper der eingangs genannten Art so auszubilden, daß Beschädigungen der Bewicklung beim Transport und späteren Einsatz des Wickelkörpers auch dann wirksam vermieden werden, wenn die Bewicklung aus einem verletzungsempfindlichen Lichtwellenleiter, besteht.

Diese Aufgabe wird erfindungsgemäß durch den im Patentanspruch 1 gekennzeichneten Wickelkörper gelöst.

Erfindungsgemäß wird aufgrund der besonderen Gestaltung des Wickelträgers zum einen ein Diffusionsweg für das Lösungsmittel an der Innenseite der Bewicklung über den Wickelträger eröffnet, so daß das Bindemittel auch an den tiefer gelegenen, wickelträgerseitigen Wickellagen abtrocknet und sich dadurch die geforderte, definierte Wickelbindung ergibt, und zum anderen werden Überdehnungen der Bewicklung, die durch eine im Vergleich zur Bewicklung höhere thermische Expansion des Wickelträgers verursacht werden, ebenso wie eine temperaturbedingte Ablösung der Bewicklung vom Wickelträger, hervorgerufen durch eine vergleichsweise stärkere thermische Kontraktion des Wickelträgers, mit Sicherheit unterbunden und demzufolge durch beide Maßnahmen gemeinsam sichergestellt, daß die Verletzungsgefahr des Wickelgutes wirksam reduziert wird, also bei einer Bewicklung mit einem Lichtwellenleiter die hohe Signalübertragungsqualität während des Lagerungs-, Transport- und Abspulvorgangs ungestört erhalten bleibt.

Um die Lösungsmittelabfuhr beim Abtrocknen des Bindemittels zu verbessern, besitzt der Wickelträger in besonders bevorzugter Weise gemäß Anspruch 2 bezüglich des Lösungsmittels im wesentlichen den gleichen oder einen geringfügig niedrigeren Diffusionskoeffizienten wie bzw. als die Bewicklung, wodurch gewährleistet wird, daß der Trocknungsprozeß bis zum völligen Austrocknen der gesamten Bewicklung relativ stetig verläuft. Zur Erzielung der geforderten Lösungsmitteldurchlässigkeit ist der Wickelträger gemäß Anspruch 2 zweckmäßigerweise aus einem offenporig porösen Material hergestellt und/oder mit Diffusionsbohrungen versehen.

Aus Gewichtsgründen, aber auch um die Diffusionswege im Wickelträger klein zu halten, ist dieser gemäß Anspruch 4 vorzugsweise als dünnwandiger, im Wandbereich lösungsmitteldurchlässiger Hohlzylinder ausgebildet.

In dem bevorzugten Anwendungsfall der Erfindung, bei dem die Bewicklung aus einem mit einer Klebstoffschicht als Bindemittel versehenen Lichtwellenleiter besteht, ist der Wickelträger nach Anspruch 5 zweckmäßigerweise aus einem keramischen Material, dessen thermischer Ausdehnungskoeffizient weitgehend mit demjenigen einer reinen Glasfaser übereinstimmt, also etwa aus Siliziumnitrid oder auch Aluminiumoxid, hergestellt.

Schließlich ist, wie bereits erwähnt, der Wickelkörper zu Signalübertragungszwecken gemäß Anspruch 6 vorzugsweise drehfest an Bord eines Fahrzeugs angeordnet und das Wickelgut, also bevorzugt der Lichtwellenleiter, wird während des Flugs bzw. während der Fahrt in Axialrichtung des Wickelkörpers abgezogen.

Die Erfindung wird nunmehr anhand eines Ausführungsbeispiels in Verbindung mit den Zeichnungen näher erläutert. Es zeigen in stark schematisierter Darstellung:
- Fig 1: eine teilweise geschnittene Ansicht eines Wickelkörpers mit einer aus einem Lichtwellenleiter bestehenden Bewicklung während des Abspulvorgangs; und
- Fig 2: eine vergrößerte Teildarstellung des Wickelträgers gemäß Fig. 1 vor dem Aufbringen der Bewicklung.

Der in den Fig. gezeigte Wickelkörper 2 enthält als Hauptbestandteile einen dünnwandigen, hohlzylindrischen Wickelträger 4 und eine auf diesen aufgebrachte Bewicklung 6, bestehend aus einem Lichtwellenleiter 8, mit dem der Wickelträger 4 in dicht neben- und übereinanderliegenden Windungen endlos bewickelt ist. Die Dicke des Lichtwellenleiters 8 ist der Deutlichkeit halber stark übertrieben dargestellt; tatsächlich enthält die Bewicklung 6 eine vielfach größere Anzahl von Wickellagen und nebeneinanderliegenden Einzelwindungen.

Während des Wickelvorgangs wird der Lichtwellenleiter 8 mit einem lösungsmittelhaltigen Bindemittel 10 in Form einer Klebstoff- oder Lackschicht versehen, mit der der Lichtwellenleiter 8 entweder vor der Wickelstation, z.B. in einem nicht gezeigten Tauchbad, überzogen wird oder die jeweils nach Aufbringen einer Wickellage auf diese aufgetragen, etwa aufgepinselt wird. Im ausgetrockneten Zustand verleiht das Bindemittel 10 der Bewicklung 6 die erforderliche Festigkeit, um bei Vibrationen oder anderen mechanischen Stoßbelastungen nicht zerstört zu werden, andererseits darf die durch das Bindemittel 10 erzielte Wickelbindung aber auch nicht so groß sein, daß beim späteren schnellen Abwickeln des Lichtwellenleiters 8 eine Funktionsstörung entsteht.

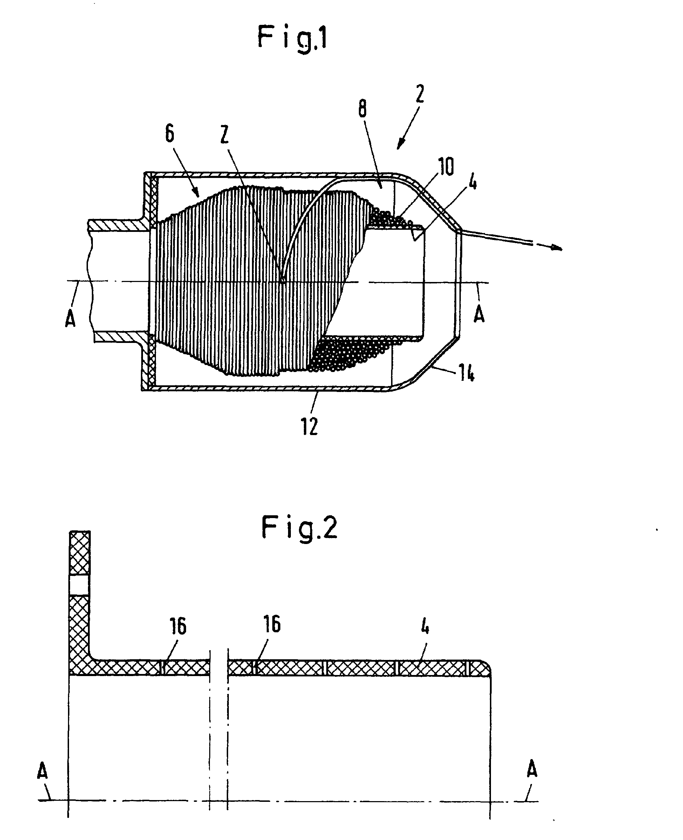

Fig. 1 zeigt den Wickelkörper 2 während des Abspulvorgangs an Bord eines (nicht gezeigten) Luft-, Boden- oder Wasserfahrzeugs, in welchem der Wickelkörper 2 feststehend montiert und in einer Außenhülle 12 mit einem sich entgegen der Flug- bzw. Fahrtrichtung nach hinten verjüngenden Ablauftrichter 14 eingeschlossen ist. Der Lichtwellenleiter 8, der zwischen dem sich bewegenden Fahrzeug und einer (ebenfalls nicht gezeigten) Empfangsstation, an die das freie Lichtwellenleiterende angeschlossen ist, einen kontinuierlichen Datenaustausch ermöglicht, vollzieht während des Abspulvorgangs eine Rotationsbewegung um die Wickelkörperachse A, nämlich einmal je abgezogener Spulenwindung, so daß er unter der daraus resultierenden Fliehkraftwirkung im wesentlichen tangential zum momentanen Abzugspunkt Z von der Bewicklung 6 nach außen in Richtung der Hülle 12 aufsteigt, von wo er nach hinten über den Ablauftrichter 14 abläuft. Für einen störungsfreien Abspulvorgang ist eine definierte, von sprunghaften Klebe- oder Haftkraftänderungen freie Wickelbindung zwischen den Windungen der Bewicklung 6 erforderlich.

Um dies zu erreichen, muß das Lösungsmittel nahezu vollständig aus der Bewicklung 6 ausdiffundiert sein. Zunächst besitzt das Bindemittel 10 am Ende des Wickelvorgangs noch eine vergleichsweise hohe und über die gesamte radiale Wickeldicke der Bewicklung 6 im wesentlichen konstante Lösungsmittelkonzentration. In Folge der unbehinderten Lösungsmittelverdunstung an den luftseitigen Außenflächen der Bewicklung 6 bildet sich dort sehr rasch eine Bindemittelhaut, die als diffusionshemmende Sperrschicht wirkt und einen weiteren Lösungsmitteltransport aus dem Inneren der Bewicklung 6 an die umgebende Atmosphäre verhindert. Auch nach längeren Trocknungszeiten besitzen daher herkömmliche Wickelkörper nach wie vor hohe Lösungsmittelkonzentrationen an den weiter innen liegenden Wickellagen und einen sehr ungleichförmigen, sich zur Außenseite hin sprunghaft ändernden Trocknungszustand.

Hinzu kommen Störeinflüsse aufgrund von Temperaturschwankungen, die zu einer unterschiedlichen thermischen Ausdehnung von Wickelträger 4 und Bewicklung 6 führen und dadurch Beschädigungen in der Bewicklung 6 verursachen können, sei es daß das Wickelgut auf dem Wickelträger 4 überdehnt wird und im Lichtwellenleiter 8 Mikrorisse entstehen, oder daß sich die Bewicklung 6 auf der Innenseite vom Wickelträger 4 ablöst und sich daher beim spateren schnellen Abziehen des Lichtwellenleiters 8 nicht mehr ordnungsgemäß abspulen läßt.

Durch die nachfolgend beschriebene Gestaltung des Wickelträgers 4 werden diese Störwirkungen abgebaut, derart, daß ein nahezu vollständiges Abtrocknen des Bindemittels 10 über die gesamte Wicklung 6 auch bei einer sehr großen radialen Bewicklungsdicke gewährleistet und zugleich eine Überdehnung des Lichtwellenleiters 8 oder ein Abheben der Bewicklung 6 vom Wickelträger 4 selbst unter dem Einfluß größerer Temperaturschwankungen mit Sicherheit verhindert wird. Zu diesem Zweck wird der Wickelträger 4 - zumindest in seinem zylindrischen Wandbereich - aus Sinterkeramik hergestellt, die neben einer hohen mechanischen Festigkeit, einem niedrigen spezifischen Gewicht und einer guten Temperatur- und Korrossionsbeständigkeit einen thermischen Ausdehnungskoeffizienten besitzt, der demjenigen des Lichtwellenleiters 8 möglichst nahe kommt. Der thermische Ausdehnungskoeffizient des Lichtwellenleiters 8 ist abhängig von der verwendeten Glassorte und liegt für eine reine Quarzglasfaser bei α = 0 bis 2 x 10⁻⁶/K. Für den Wickelträger 4 wird ein keramisches Material mit einem dementsprechend niedrigen α, z.B. Siliziumnitrid (α = 3,2 **x 10⁻⁶/K**) oder auch Aluminiumoxid (α = 8,5 **x 10⁻⁶/K**) gewählt. Zugleich wird das Keramikmaterial des Wickelträgers 4 für das Lösungsmittel des Bindemittels 10 durchlässig ausgebildet, indem das Keramikgrundmaterial bei der sogenannten Grünbearbeitung nach dem Pressen, jedoch vor dem Sintern in dem zylindrischen Wickelträgerabschnitt mit einer Vielzahl von Diffusionslöchern 16 (Fig. 2) versehen und/oder der Wickelträger 4 aus einem von sich aus offenporig porösen Keramikwerkstoff hergestellt wird.

Nach dem Sintern besitzt der Wickelträger 4 einen Porositätsgrad zwischen etwa 70% und 97%, der in Abhängigkeit von dem Lösungsmittel so gewählt wird, daß der Wickelträger 4 bezüglich des Lösungsmittels annähernd den gleichen oder einen allenfalls geringfügig kleineren Diffusionskoeffizienten wie die Bewicklung 6 aufweist. Beim Abtrocknen der Bewicklung 6 diffundiert infolgedessen das Lösungsmittel durch den Wickelträger 4 hindurch und entweicht in die umgebende Atmosphäre, ohne daß an der Grenzfläche zwischen Wickelträger 4 und Bewicklung 6 eine diffusionshemmende bzw. - unterbrechende Sperrschicht in Form einer Kleber- bzw. Lackhaut entsteht, da an dieser Grenzfläche das Bindemittel 10 nicht sofort abtrocknen kann. Aus dem Inneren der Bewicklung 6 diffundiert somit laufend Lösungsmittel nach, so daß die Lösungsmittelkonzentration über die gesamte Radialbreite der Bewicklung 6 langsam abnimmt, bis die Bewicklung 6 völlig ausgetrocknet ist. Nach Beendigung des Trocknungsvorgangs wird eine weitgehend lösungsmittelrückstandsfreie, gleichförmige Wickelbindung über die gesamte Bewicklung 6 erhalten.

Als Bindemittel 10 können sowohl Kleber oder Lacke mit einem leichtflüchtigen Lösungsmittel etwa Toluol, in Verbindung mit einem relativ niedrigen Porositätsgrad des Wickelträgers 4 verwendet werden, als auch solche auf Wasserbasis, die einen dementsprechend höheren Porositätsgrad des Wickelträgers 4 verlangen.

Zusätzlich kann der Wickelträger 4 auf der Außenseite des zylindrischen Wandabschnitts mit Wicklungsrillen für die erste Wickellage der Lichtwellenleiter-Bewicklung 6 versehen sein, die ebenfalls bei der Grünbearbeitung des Keramikgrundmaterials eingebracht werden. Ferner empfiehlt sich gegebenenfalls eine Oberflächenfeinbearbeitung nach dem Sintern des Wickelträgers 4, beispielsweise an der Abschlußkante. Allerdings ist es auch möglich, eine zusätzliche Abschlußkante, etwa aus Kunststoff aufzukleben, falls dies für einen glatten Abzug des Lichtwellenleiters 8 erforderlich ist.

## Patentansprüche

1. Wickelkörper, bestehend aus einem Wickelträger und einer auf diesem angeordneten Bewicklung aus einem Glasfaser-Lichtwellenleiter (8), deren Windungen gegenseitig durch ein unter Abdiffundieren eines flüchtigen Lösungsmittels abtrocknendes Bindemittel fixiert sind, **dadurch gekennzeichnet, dass** der Wickelträger (4)
- aus lösungsmitteldurchlässig ausgebildetem keramischem Material mit dem gleichen thermischen Ausdehnungskoeffizienten wie die Bewicklung (6) besteht und
- bezüglich des Lösungsmittels den gleichen oder einen geringfügig kleineren Diffusionskoeffizienten wie die Bewicklung (6) aufweist, so dass das Lösungsmittel aus dem Inneren der Bewicklung über den Wickelträger (4) laufend nach innen abdiffundieren kann.

2. Wickelkörper nach Anspruch 1, **dadurch gekennzeichnet, dass** der Wickelträger (4) aus offenporig porösem keramischem Material hergestellt und/oder mit Diffusionsbohrungen (16) versehen ist.

3. Wickelkörper nach Anspruch 1 oder 2, **dadurch gekennzeichnet, dass** der Wickelträger (4) als Hohlzylinder ausgebildet ist.

4. Wickelkörper nach einem der Ansprüche 1 - 3, **dadurch gekennzeichnet, dass** der Wickelträger (4) aus Siliziumnitrid und die Bewicklung (6) aus einem mit einer Klebstoffschicht als Bindemittel (10) versehenen Glasfaser-Lichtwellenleiter (8) besteht.

5. Wickelkörper nach einem der Ansprüche 1-3, **dadurch gekennzeichnet, dass** der Wickelträger (4) aus Aluminiumoxid und die Bewicklung (6) aus einem mit einer Klebstoffschicht als Bindemittel (10) versehenen Glasfaser-Lichtwellenleiter (8) besteht.

6. Wickelkörper nach Anspruch 4 oder 5, **dadurch gekennzeichnet, dass** der Wickelträger (4) drehfest an Bord eines Fahrzeugs angeordnet und der Glasfaser-Lichtwellenleiter (8) in Axialrichtung des Wickelkörpers abziehbar ist.

## Claims

1. Winding form consisting of a winding support and a winding which is arranged on the latter and consists of a glass-fibre optical waveguide (8) and whose windings are mutually fixed by means of a binding agent that dries with outward diffusion of a volatile solvent, **characterised in that** the winding support (4)
- consists of ceramic material that is formed so that it is permeable to solvent and has the same coefficient of thermal expansion as the winding (6); and
- with regard to the solvent has the same coefficient of diffusion as or a slightly smaller coefficient of diffusion than the winding (6) so that the solvent can continuously diffuse out inwards from the interior of the winding by way of the winding support (4).

2. Winding form according to claim 1, **characterised in that** the winding support (4) is produced from open-pored porous ceramic material and/or is provided with diffusion bores (16).

3. Winding form according to claim 1 or 2, **characterised in that** the winding support (4) is formed as a hollow cylinder.

4. Winding form according to one of claims 1-3, **characterised in that** the winding support (4) consists of silicon nitride, and the winding (6) consists of a glass-fibre optical waveguide (8) that is provided with a layer of adhesive as the binding agent (10).

5. Winding form according to one of claims 1-3, **characterised in that** the winding support (4) consists of aluminium oxide, and the winding (6) consists of a glass-fibre optical waveguide (8) that is provided with a layer of adhesive as the binding agent (10).

6. Winding form according to claim 4 or 5, **characterised in that** the winding support (4) is arranged in a rotationally secure manner on board a vehicle, and the glass-fibre optical waveguide (8) can be drawn off in the axial direction of the winding form.

## Revendications

1. Bobine, composée d'un support de bobine et d'un enroulement disposé sur celui-ci, constitué d'une fibre optique (8) dont les spires sont fixées mutuellement par un liant séchant par la diffusion d'un solvant volatil,
**caractérisée en ce que**
le support de bobine (4)
- se compose d'un matériau céramique perméable au solvant et de même coefficient de dilatation thermique que l'enroulement (6), et
- vis-à-vis du solvant, présente un coefficient de diffusion identique ou légèrement inférieur à celui de l'enroulement (6), de telle sorte que le solvant peut se diffuser de manière continue vers l'intérieur à partir de l'intérieur de l'enroulement via le support de bobine (4).

2. Bobine selon la revendication 1,
**caractérisée en ce que**
le support de bobine (4) est fabriqué à partir d'un matériau céramique poreux à pores ouverts et/ou est pourvu de perçages de diffusion (16).

3. Bobine selon la revendication 1 ou 2,
**caractérisée en ce que**
le support de bobine (4) est en forme de cylindre creux.

4. Bobine selon l'une des revendications 1 à 3,
**caractérisée en ce que**
le support de bobine (4) se compose de nitrure de silicium et l'enroulement (6) se compose d'une fibre optique (8) pourvue d'une couche d'adhésif en tant que liant (10).

5. Bobine selon l'une des revendications 1 à 3,
**caractérisée en ce que**
le support de bobine (4) se compose d'oxyde d'aluminium et l'enroulement (6) se compose d'une fibre optique (8) pourvue d'une couche d'adhésif en tant que liant (10).

6. Bobine selon la revendication 4 ou 5,
**caractérisée en ce que**
le support de bobine (4) est disposé de manière non rotative à bord d'un véhicule et la fibre optique (8) peut être tirée dans la direction axiale de la bobine.
